# DEMANDE DE BREVET EUROPEEN

(11) **EP 0 624 688 A1**
(43) Date de publication de la demande: **17.11.1994**
(21) Numéro de dépôt: 94401014.9
(22) Date de dépôt: 09.05.1994
(51) Int. Cl.: D21H 21/42

(54) **Feuille de sécurité comportant des éléments de sécurité protégés et son procédé de fabrication**

(30) Priorité: 12.05.1993 FR 9305688
(71) Demandeur: ARJO WIGGINS S.A., F-92442 Issy-les-Moulineaux (FR)
(72) Inventeur: Doublet, Pierre, F-77320 Jouy Sur Morin (FR); Douesneau, Yves, F-94270 Le Kremlin Bicetre (FR); Menez, Jean-Paul, F-91370 Verrieres Le Buisson (FR)
(74) Mandataire: Leszczynski, André

(57) **Abrégé**

L'invention concerne une feuille de sécurité.

Elle comporte au moins un élément de sécurité situé en un point de la surface (S) de la feuille, l'élément de sécurité (4) étant revêtu d'une couche protectrice (5).

L'élément de sécurité 4 peut comporter au moins une surface métallique réfléchissant ou diffractant la lumière, par exemple un hologramme.

Application au papier pour billets de banque.

## Description

Il est connu dans des documents de sécurité tels que papiers pour billets de banque, chèques, passeports, d'introduire des éléments de sécurité. Ces éléments de sécurité peuvent être des fils de sécurité qui sont des petites bandes de matière plastique, de métal qui sont incorporées dans la feuille de papier au cours de sa fabrication. Ces fils sont identifiables en lumière transmise.

On a décrit dans les documents EP-A-59056 et EP-A-229645 des procédés pour incorporer un fil de sécurité dans le papier de façon qu'il sorte en certains endroits de la masse du papier. Ces procédés sont intéressants lorsque le fil possède des propriétés de réflexion métallique et est donc brillant. De tels fils réfléchissants ne peuvent être reproduits par photocopie. A la place de la surface réfléchissante du fil, il apparaît seulement une tache sombre, ce qui permet de distinguer l'original de la copie.

On a décrit dans le document EP-A-377167 des papiers de sécurité comportant des fils de sécurité situés au moins en un point de la surface du papier, comportant des structures déviant la lumière, par exemple des hologrammes. Cependant, lorsqu'on effectue une impression sur ces papiers de sécurité, les hologrammes qui sont constitués en général d'une couche très fine d'aluminium déposée par transfert, ont tendance à perdre des particules d'aluminium lors de l'impression. S'il s'agit d'une impression offset, les particules d'aluminium viennent adhérer sur les blanchets de la machine d'impression et il s'ensuit une mauvaise impression.

Pour éviter ce phénomène, on effectue d'abord l'impression puis on reporte les hologrammes. Cependant, un tel procédé ne permet pas d'obtenir une sécurité suffisante.

L'invention vise à fournir un document de sécurité évitant les inconvénients mentionnés ci-dessus.

L'invention concerne donc une feuille de sécurité comportant au moins un élément de sécurité situé en un point de la surface de la feuille, caractérisée par le fait que l'élément de sécurité est revêtu d'une couche protectrice.

L'élément de sécurité peut par exemple être constitué d'au moins une surface réfléchissante, ou une surface métallique diffractant la lumière. De préférence, l'élément de sécurité peut comporter un hologramme.

De préférence, la couche protectrice est une couche de matière plastique. On peut aussi déposer sur la couche de matière plastique une couche de vernis incolore qui peut améliorer l'impression.

Le procédé de fabrication d'un document de sécurité selon l'invention est tel que l'on introduit lors de la fabrication de la feuille par voie papetière un fil de sécurité constitué d'un ruban portant au moins un élément de sécurité revêtu d'une couche protectrice.

Le ruban peut être une feuille de matière plastique, éventuellement transparente. Le ruban peut être soluble dans l'eau. Par exemple, il peut être en alcool polyvinylique (PVA) ou plus généralement c'est un ester soluble dans l'eau. Le ruban peut aussi être une bande support fabriquée au préalable de façon à être intégrée et invisible dans la feuille finie. Cette bande peut être obtenue par voie papetière à partir d'une composition fibreuse de fibres de cellulose et de fibres d'ester soluble dans l'eau, par exemple du PVA.

Le ruban est ensuite introduit lors de la fabrication de la feuille de sécurité, de façon que le ou les éléments de sécurité apparaissent en surface du papier. On peut par exemple introduire le ruban selon les procédés décrits dans les documents EP-A-59056 et EP-A-70172 où on forme un bi-jet comportant des épaisseurs inférieures aux endroits où apparaîtront les éléments de sécurité comme dans le document EP-A-229645.

La description suivante, en regard des dessins annexés à titre d'exemples non limitatifs permettra de comprendre comment l'invention peut être mise en pratique.

La figure 1 est une vue en coupe d'une feuille de sécurité selon l'invention.

La figure 2 est une vue de dessus d'un ruban introduit dans la feuille selon l'invention.

La figure 3 est une vue d'une machine à papier forme ronde pour réaliser le procédé selon l'invention.

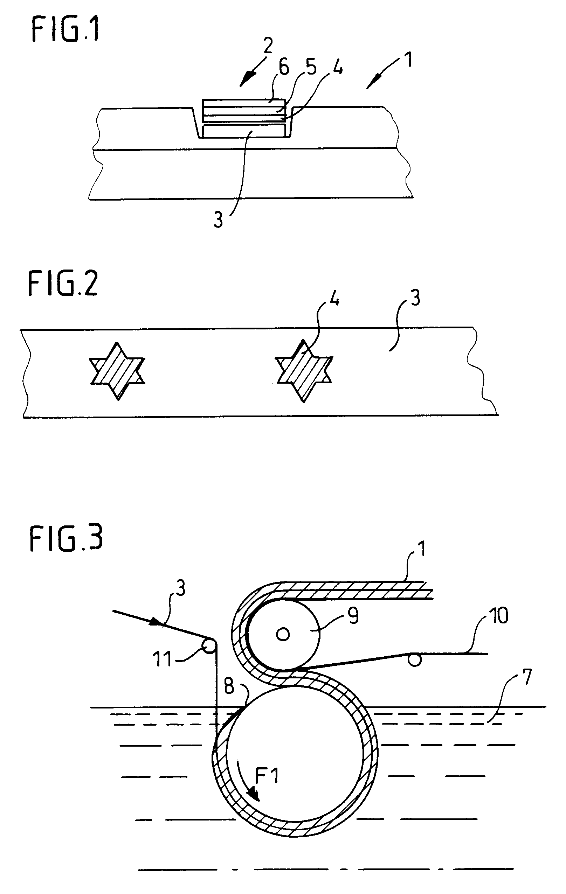

Sur la figure 1, on a représenté une feuille de sécurité 1 selon l'invention.

La feuille 1 comporte au moins un fil de sécurité 2 comportant un élément de sécurité 4 situé à la surface de la feuille.

L'élément de sécurité 4 est supporté par une bande 3 ou ruban.

L'élément 4 est revêtu d'une couche protectrice 5 et d'un vernis 6. De préférence, l'élément de sécurité 4 est un hologramme.

Selon un mode préféré de l'invention, l'ensemble hologramme 4, couche 5 et vernis 6 sont tels qu'ils affleurent la surface S de la feuille de sécurité 1.

L'élément de sécurité 4 qui est un hologramme a une forme étoilée sur la figure 2.

Ainsi, lorsqu'un contrefacteur voudra photocopier la feuille de sécurité 1, il apparaîtra une zone grise à la place du rectangle.

Le ruban 3 représenté sur la figure 1 est un ruban qui peut être soluble dans l'eau, par exemple un ester et plus particulièrement un alcool polyvinylique.

Le ruban 3 peut aussi être un ruban obtenu par voie papetière à l'aide d'un mélange de fibres de cellulose et de matière soluble dans l'eau, tel que le PVA, les quantités respectives de fibres de cellulose et de PVA étant réglées par l'homme du métier de façon que lorsque le ruban 3 est introduit dans la feuille 1, ce ruban est invisible.

Le ruban 3 peut aussi être en matière plastique transparente, par exemple du polyester.

On dépose sur le ruban 3 des hologrammes 4 à des endroits déterminés du ruban 3, puis on dépose une couche continue transparente protectrice 5 et éventuellement un vernis 6.

Le procédé d'introduction du fil peut se faire comme représenté sur la figure 3. Une machine à papier forme ronde comprend une suspension aqueuse 7 de fibres de cellulose, des liants et éventuellement d'autres composés habituellement utilisés pour former une feuille de papier.

Une forme ronde 8 est constituée d'une grille sous forme de cylindre. La composition est déposée sur la grille lorsqu'elle tourne dans le sens de la flèche F1. La feuille 1 se forme sur le cylindre et est tirée par le rouleau 9 et est transférée sur un feutre 10 pour être ensuite séchée.

On introduit un ruban 3 qui est guidé par un rouleau 11 de façon à ce que les fibres ne se déposent pas sur une certaine longueur 1 pour former les fenêtres. Le ruban 3 comporte des hologrammes 4. Les fenêtres sont réalisées par des embossages effectués sur la grille de la forme ronde 8. Ces fenêtres 4 sont en fait des filigranes. La forme des embossages (non représentés sur la figure 3) est fonction de la forme souhaitée des fenêtres. Bien entendu on peut réaliser la feuille selon l'invention en réalisant un papier bi-jet soit sur forme ronde soit sur machine table plate.

### Exemple

On dépose par transfert sur une feuille de matière plastique transparent, par exemple du polyester, des hologrammes sous forme d'étoiles équidistantes. On dépose une couche protectrice sur la feuille. Cette couche peut par exemple être obtenue par pelliculage, à savoir adhésion d'une feuille de plastique transparent. On peut éventuellement déposer sur la couche protectrice un vernis améliorant l'impression sur la feuille.

On découpe ensuite la feuille en ruban que l'on introduit dans une feuille de papier lors de sa fabrication sur une machine à papier forme ronde, de façon à réaliser des fenêtres en correspondance avec les hologrammes pour que les hologrammes apparaissent à la surface de la feuille.

## Revendications

1. Feuille de sécurité comportant au moins un élément de sécurité situé en un point de la surface (S) de la feuille, caractérisée par le fait que l'élément de sécurité (4) est revêtu d'une couche protectrice (5).

2. Feuille selon la revendication 1, caractérisée par le fait que l'élément de sécurité (4) comporte au moins une surface métallique réfléchissant ou diffractant la lumière.

3. Feuille selon la revendication 2, caractérisée par le fait que l'élément de sécurité (4) est un hologramme.

4. Feuille selon l'une des revendications précédentes, caractérisée par le fait que la couche protectrice (5) est une couche de matière plastique revêtue éventuellement d'un vernis incolore.

5. Procédé de fabrication d'une feuille selon l'une des revendications 1 à 4, caractérisé par le fait qu'on introduit un ruban (3) lors de la fabrication de la feuille par voie papetière.

6. Procédé selon la revendication 5, caractérisé par le fait que l'on obtient le ruban (3) à partir d'une feuille de matière plastique sur laquelle on dépose et solidarise des éléments de sécurité (4), on solidarise une feuille protectrice sur la face portant les éléments de sécurité (4), et on découpe la feuille en bandes.

7. Procédé selon la revendication 6, caractérisé par le fait que l'on obtient le ruban (3) à partir d'une feuille obtenue par voie papetière à partir de fibres de cellulose et de fibres solubles dans l'eau, sur laquelle on dépose et solidarise des éléments de sécurité (4), on solidarise une feuille protectrice sur la face portant les éléments de sécurité (4), et on découpe la feuille en bandes.

8. Procédé selon la revendication 6, caractérisé par le fait que l'on obtient le ruban (6) à partir d'une feuille soluble dans l'eau sur laquelle on dépose et solidarise des éléments de sécurité (4), on dépose un vernis protecteur sur la face du ruban portant les éléments de sécurité, et on découpe la feuille en bandes.
